(19) **Europäisches Patentamt / European Patent Office / Office européen des brevets**

(11) **EP 1 471 366 B1**

(12) **FASCICULE DE BREVET EUROPEEN**

(45) Date de publication et mention
de la délivrance du brevet:
**28.05.2008 Bulletin 2008/22**

(51) Int Cl.:
*G01S 13/02* (2006.01) *G06K 7/00* (2006.01)

(21) Numéro de dépôt: **04101652.8**

(22) Date de dépôt: **21.04.2004**

(54) **Dispositif d'émission-réception RF**

RF Sende-Empfänger-Vorrichtung

RF transceiver

(84) Etats contractants désignés:
**DE GB IT**

(30) Priorité: **23.04.2003 FR 0350122**

(43) Date de publication de la demande:
**27.10.2004 Bulletin 2004/44**

(73) Titulaire: **COMMISSARIAT A L'ENERGIE
ATOMIQUE**
**75015 Paris (FR)**

(72) Inventeur: **BILLIOT, Gérard**
**38330, SAINT-NAZAIRE-les-EYMES (FR)**

(74) Mandataire: **Poulin, Gérard**
**Brevatome**
**3, rue du Docteur Lancereaux**
**75008 Paris (FR)**

(56) Documents cités:
**EP-A- 0 940 769 US-A- 6 049 292**
**US-A1- 2002 008 611**

## Description

## DOMAINE TECHNIQUE

L'invention concerne un dispositif d'émission-réception RF, par exemple une station de base de génération d'un champ électromagnétique pour communiquer avec un module portable, dans le domaine des étiquettes RFID (« dispositifs d'identification à fréquence radio » ou « Radio Frequency Indentification Devices »).

## ETAT DE LA TECHNIQUE ANTERIEURE

Dans la suite, pour simplifier la description, on considérera le cas d'une telle station de base.

Dans le domaine des étiquettes RFID, un système téléalimenté comprend :

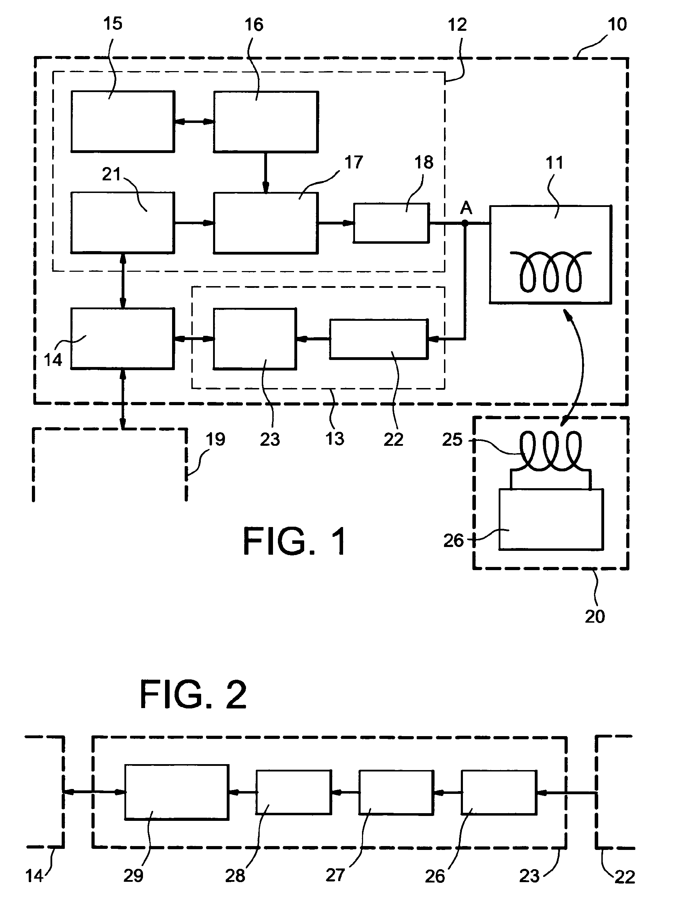

- une station de base 10, et
- un module mobile 20, ou étiquette, illustrés sur la figure 1.

Le rôle de la station de base 10 est de fournir de l'énergie au module mobile 20 et de communiquer avec celui-ci, par l'intermédiaire d'une antenne 11 dite « antenne de base », en utilisant une onde électromagnétique dont la fréquence, appelée « fréquence porteuse », est généralement située dans le domaine des fréquences radio (RF). Une telle station de base 10 peut communiquer de façon filaire avec son environnement extérieur : réseau, ordinateur....

Le rôle principal du module mobile 20, qui comprend une inductance 25 associée à un circuit de contrôle 26, est d'échanger les informations qu'il contient, de modifier éventuellement ces informations, d'effectuer des mesures... lorsqu'il est en présence d'un champ électromagnétique suffisant pour assurer son fonctionnement. Dans ce module, ce champ est capté et transformé en énergie électrique par l'inductance 25 appelée « antenne mobile ».

Comme illustré sur la figure 1, la station de base 10 comprend :

- une antenne 11,
- une partie émission 12,
- une partie réception 13, et
- un bloc de traitement et d'interfaçage numérique 14 avec un interface externe 19.

La partie émission 12 comprend différents blocs successifs pour générer le champ électromagnétique permettant l'alimentation en énergie du module mobile 20 :

- un bloc de gestion d'alimentation 15,
- un éventuel régulateur d'alimentation 16,
- un amplificateur de puissance 17,
- un bloc de filtrage 18.

La partie émission 12 comprend également un bloc de modulation-codage 21 qui est relié à l'amplificateur de puissance 17 et au bloc de traitement et d'interfaçage numérique 14.

Le régulateur d'alimentation 16 sert à réguler la tension d'alimentation, limiter la puissance fournie,... pour fournir à l'amplificateur de puissance 17 une alimentation de puissance ayant les caractéristiques adaptées.

A partir du signal de porteuse et de la modulation fournis par le bloc de modulation-codage 21, l'amplificateur de puissance 17 génère un signal RF de puissance modulé, propre à être chargé par une antenne 11 de faible impédance (typiquement 50 ohms, mais des valeurs plus faibles sont tout à fait possibles).

Le bloc de filtrage 18 permet d'adapter le signal de sortie de l'amplificateur de puissance 17 à la charge représentée par l'antenne 11, de réaliser un filtrage éventuel de ce signal de sortie en fonction du mode de réalisation de cet amplificateur de puissance 17.

L'antenne 11 permet de générer un champ électromagnétique à partir des signaux fournis par le bloc de filtrage 18. Les caractéristiques de celle-ci dépendent de la forme géométrique du champ que l'on veut émettre, et de la puissance de l'amplificateur 17.

La génération du champ électromagnétique est permanente pendant toute la durée de communication entre la station de base 10 et le module mobile 20, grâce à une émission permanente de la fréquence porteuse par la station de base 10.

Le bloc de modulation-codage 21 assure la génération du signal RF à émettre (fréquence porteuse), selon le protocole et les modulation-codage utilisés. Cette modulation est généralement une modulation de l'amplitude de la fréquence porteuse.

La partie réception 13 comprend :

- un éventuel bloc de filtrage 22,
- un bloc de réception 23.

Le bloc de filtrage 22 permet de réaliser un filtrage mais aussi une adaptation d'amplitude pour entrer de façon correcte dans le bloc de réception 23.

En effet lorsque la station de base 10 est réalisée à l'aide d'un circuit intégré, la limite de l'intégration est, en général, située entre ces deux blocs 22 et 23. En effet, le prélèvement du signal peut être effectué sur un noeud A présentant une haute tension, que l'on ne peut appliquer directement sur la broche d'entrée d'un circuit intégré. Il est donc nécessaire de disposer d'un bloc d'adaptation 22 disposé à l'extérieur de ce circuit intégré.

Dans le cadre des échanges entre la station de base 10 et le module portable 20, on peut avoir, d'un point de vue séquentiel, un échange effectué sur le mode semi-duplex. Ainsi pendant une émission de la station de base 10 vers le module portable 20 (phase d'émission), il y a émission de la fréquence porteuse modulée en amplitude selon l'indice et le rythme des données émises. On peut ainsi utiliser une fréquence porteuse de 13,56 MHz avec une modulation d'amplitude d'indice 10% à un rythme de 106 KHz.

Du fait du caractère passif du module mobile 20, qui ne dispose pas d'une énergie propre, le principe utilisé pour la communication dans le sens du module portable 20 vers la station de base 10 (phase de réception), peut être considéré comme une modulation de charge. En effet, pendant cette modulation, le module mobile 20 fait varier la charge apparente apparaissant sur l'antenne 25. Du fait du couplage inductif existant entre cette antenne 25 et l'antenne de base 11, cela se traduit par une variation d'impédance de l'antenne de base 11.

Cette modulation induit donc une variation d'amplitude et/ou de phase de la fréquence porteuse, qui est utilisée dans la partie réception 13 de la station de base 10.

Pendant la phase de réception, la station de base 10 continue d'émettre la porteuse sans modulation afin d'assurer l'alimentation en énergie du module mobile.

Le schéma de la partie de réception 13 de la station de base 10 est indépendant du schéma de la partie d'émission 12. Comme illustré sur la figure 2, le bloc de réception 23 peut comprendre successivement :

- un bloc de démodulation 26,
- un bloc de gain-filtrage basse fréquence 27,
- un bloc de numérisation 28,
- un bloc de traitement numérique 29.

Le prélèvement du signal à démoduler s'effectue au noeud A, directement sur l'antenne 11. Le bloc de démodulation 26 assure la démodulation RF qui permet d'éliminer la fréquence porteuse présente de façon permanente sur le signal d'entrée pour la transmission de l'énergie au module mobile 20. Il assure la conversion de la modulation issue du module mobile 20 en bande de base. Ce bloc 26 peut comprendre tous les moyens connus de l'homme de l'art pour réaliser une démodulation d'amplitude, tels que des mélangeurs en quadrature, un démodulateur auto-synchrone, un démodulateur à diodes...

Le bloc de gain-filtrage basse fréquence 27 effectue une amplification-filtrage du signal en bande de base afin de permettre d'éliminer les éventuels parasites, avant d'être numérisé par le bloc de numérisation 28.

Le signal numérique ainsi obtenu est alors traité par le bloc de traitement numérique 29 selon le protocole et les modulation-codage utilisés pour obtenir les informations numériques originelles transmises par le module mobile 20.

Les caractéristiques définies ci-dessus se retrouvent dans deux documents de l'art connu : la demande de brevet FR 2 808 941 et le brevet US 6 049 292.

La demande de brevet FR 2 808 941 décrit une borne de génération d'un champ électromagnétique propre à communiquer avec au moins un transpondeur. Une telle borne comprend :

- un circuit oscillant propre à être excité par un signal de téléalimentation du transpondeur,
- un démodulateur d'amplitude pour détecter d'éventuelles données émises par le transpondeur,
- des moyens de régulation de la phase du signal dans le circuit oscillant de la borne sur une valeur de référence,
- des moyens de mesure de grandeurs liées au courant dans le circuit oscillant et à la tension à ses bornes, et
- des moyens de comparaison des valeurs courantes de ces grandeurs à des valeurs prédéterminées, afin de déterminer la présence d'un transpondeur.

Le brevet US 6 049 292 décrit un procédé de transmission d'informations entre un transpondeur passif et une station de base, qui utilise une modulation de charge dans le transpondeur. Les bobines de circuits résonants existant dans la station de base et dans le transpondeur sont couplées entre elles, ces circuits résonants étant accordés à la fréquence porteuse de la station de base de telle façon que la modulation de charge du circuit résonant dans le transpondeur influence le courant dans le circuit résonant de la station de base.

Le problème principal posé par de tels dispositifs de l'art connu est un problème de sensibilité de la détection en tension, lorsque l'on souhaite transmettre une puissance maximum à la charge que représente l'antenne 11 de la station de base.

L'invention a pour objet de résoudre un tel problème en proposant une nouvelle architecture de dispositif d'émission-réception RF, par exemple de station de base, qui prenne en compte les spécificités du signal à analyser en réception par rapport à l'émission, tout en permettant une détection optimale du signal en réception.

La demande de brevet US 2002/008611 décrit un terminal permettant de générer un champ électromagnétique adapté à communiquer avec au moins un transpondeur, et un procédé pour contrôler un tel terminal.

La demande de brevet EP-A-0 940 769 décrit un dispositif support de données qui comprend au moins une bobine pour la réception sans contact de signaux modulés en amplitude, un circuit rectificateur connecté à cette bobine, un circuit de configuration qui traite et stocke les données, un circuit de contrôle de la tension d'alimentation, et un dispositif de mesure du courant qui fonctionne comme un démodulateur d'amplitude.

## EXPOSÉ DE L'INVENTION

L'invention concerne un dispositif d'émission-réception RF, par exemple une station de base de génération d'un champ électromagnétique apte à communiquer avec au moins un module portable entrant dans ce champ, comprenant :

- une antenne
- une partie émission qui comprend un régulateur d'alimentation relié à un amplificateur de puissance qui délivre un signal RF de puissance modulé à l'antenne,
- une partie réception qui comprend un bloc de gain-filtrage basse fréquence,
- un bloc de traitement et d'interfaçage numérique,

caractérisé en ce que le signal d'entrée du bloc gain-filtrage basse fréquence de la partie réception est fourni par le régulateur d'alimentation, qui génère un courant image du courant tiré par l'amplificateur de puissance sur le régulateur d'alimentation.

Avantageusement le régulateur d'alimentation est un régulateur de tension de type LDO, qui comprend :

- un premier transistor de régulation principal de type PMOS ;
- un second transistor de type PMOS dont la taille est un sous-multiple entier de la taille du premier transistor et dont la longueur est identique à la longueur de celui-ci ;
- un amplificateur différentiel, et
- un pont de résistances.

Avantageusement la partie réception comprend successivement :

- un bloc de gain-filtrage BF,
- un bloc de numérisation,
- un bloc de traitement numérique.

Les intérêts d'un tel dispositif d'émission-réception RF sont multiples :

- simplification de la réception,
- amélioration de la sensibilité de détection,
- suppression de la broche d'entrée du signal RF. Le bloc d'adaptation du signal d'entrée n'a donc plus lieu d'être, ce qui permet d'éliminer des contraintes existant sur le bloc de filtrage et sur l'antenne, et de diminuer les coûts de réalisation. De plus, les risques d'injections de parasites, de couplage,... sur le noeud de haute sensibilité sont diminués.

L'invention peut être utilisée avantageusement dans la réalisation de circuits intégrés ayant pour fonction de réaliser des stations de base de systèmes RFID, mais aussi de tout système de communication RF où la compacité et l'intégration sont des critères importants.

**BRÈVE DESCRIPTION DES DESSINS**

La figure 1 illustre le synoptique général d'un système de l'art connu.

La figure 2 illustre la partie réception du système de l'art connu de la figure 1.

La figure 3 illustre le synoptique général d'une station de base selon l'invention.

La figure 4 illustre un schéma d'impédance de partie émission de la station de base selon l'invention.

La figure 5 illustre un schéma de principe de l'alimentation de l'amplificateur de puissance de la partie émission de la station de base selon l'invention, avec prélèvement de courant.

Sur ces synoptiques, les connexions entre blocs ne sont pas détaillées de façon exhaustive, et les flèches ne sont qu'indicatives de la direction des informations principales véhiculées par les fils de connexion entre ces blocs.

**EXPOSÉ DÉTAILLÉ DE MODES DE RÉALISATION PARTICULIERS**

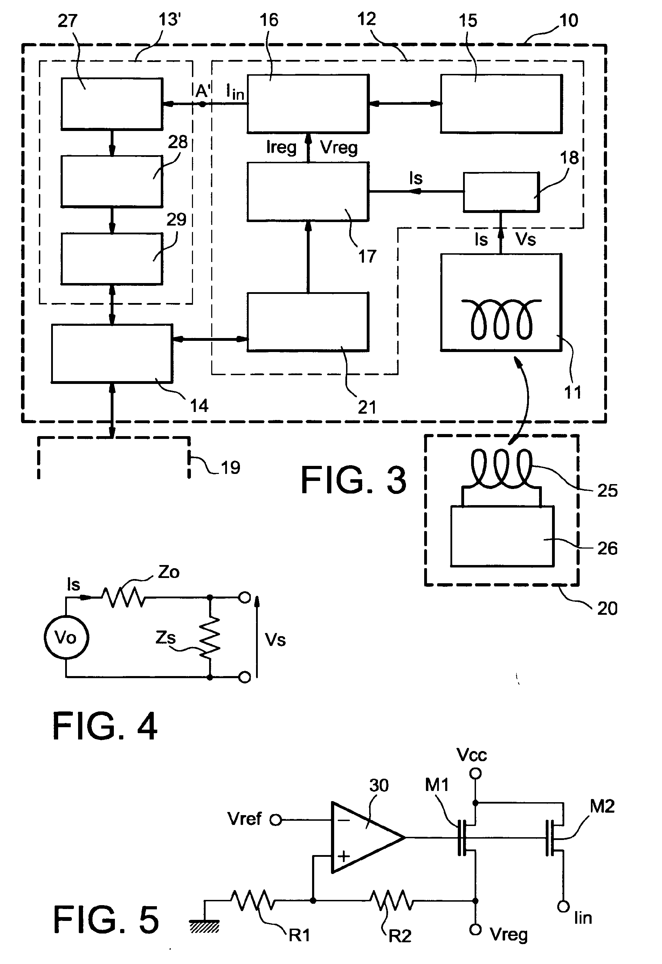

La figure 3 illustre le synoptique général d'un dispositif d'émission-réception RF selon l'invention, qui est ici une station de base. Sur cette figure les blocs déjà représentés sur la figure 1 ont conservé la même référence. Etant donné que ces blocs ont également été décrits ils ne seront pas décrits ci-dessous.

Comme décrit précédemment, le signal qui arrive sur cette station de base 10 est constitué d'une porteuse, avec sa fréquence propre, dont l'amplitude est modulée à une autre fréquence, cette modulation d'amplitude portant l'information reçue du module portable 20

Le prélèvement du signal d'entrée de la partie réception 13', effectué précédemment en tension au niveau de l'antenne 11 (noeud A de la figure 1), est réalisé, à présent, par un prélèvement en courant au niveau du régulateur d'alimentation 16 (noeud A').

En effet, si l'on considère la partie émission 12 comme un générateur de tension Vo sous une impédance Zo connecté à une charge d'impédance Zs, comme illustré sur la figure 4, la sensibilité relative de la tension Vs par rapport à la variation relative de Zs s'exprime dans la relation suivante :

$$dVs/Vs*Zs/dZs=Zo/(Zo+Zs).$$

La sensibilité relative du courant Is dans Zo par rapport à la variation relative de Zs s'exprime dans la relation suivante :

$$dIs/Is*Zs/dZs=-Zs/(Zo+Zs).$$

Ainsi lorsqu'on dispose d'un amplificateur de puissance 17 d'impédance de sortie Zo inférieure ou égale à l'impédance de charge Zs, il est plus intéressant d'effectuer une analyse du signal reçu portant sur le courant fourni Is plutôt que sur la tension Vs délivrée à la charge.

Ce courant Is en entrée de l'amplificateur de puissance 17, comme illustré sur la figure 3, est tel que Is = Im sin ωt où ω est la pulsation de la porteuse et Im l'amplitude du courant fourni à la charge 11 et qui reflète les modulations du signal émis par le module 20. Le courant Ireg est le courant tiré par l'amplificateur de puissance 17 sur le régulateur d'alimentation 16 sous une tension Vreg interne à ce régulateur, qui est lui-même alimenté par une source externe Vcc. Ireg permet de fournir Is à la charge 11 qui peut ainsi émettre la porteuse et donc alimenter le mobile 20.

L'amplificateur de puissance 17 impose des variations de courant Ireg dont la valeur est proportionnelle à celle de l'amplitude Im qu'il reçoit.

Ainsi pendant une phase de réception, la démodulation RF du signal reçu par la station de base 10 est effectuée sur le courant Is par l'amplificateur de puissance 17. Ce signal démodulé est véhiculé par Ireg. Comme le bloc régulateur d'alimentation 16 fournit Ireg, il doit avoir une bande passante suffisante pour permettre la réception du signal issu du module mobile 20. Le bloc de démodulation RF 26 de la figure 1 n'est plus nécessaire. Le régulateur génère alors un courant Iin image de Ireg au circuit de traitement 13' pour effectuer le traitement de l'information. Ce courant Iin est proportionnel à Ireg et donc à Im.

Le traitement du signal est avantageusement effectué ensuite dans le bloc de gain-filtrage basse fréquence 27 et le bloc de numérisation 28 en mode courant, car on dispose d'une information primaire en courant. Mais ce traitement peut être réalisé en tension après conversion en tension du courant porteur de l'information.

Les différents blocs constituant la station de base de l'invention sont réalisés de manière bien connue de l'homme du métier, et ne sont donc pas détaillés ici.

Seul un exemple de réalisation du régulateur d'alimentation 16, en utilisant un régulateur de tension de type LDO (« Low Drop Out »), est illustré sur la figure 5. Dans cet exemple le transistor de régulation principal M1 est de type PMOS. M2 est un transistor de même type dont la taille (W) est un sous-multiple entier de la taille du transistor M1 et dont la longueur L est identique. Ainsi, le courant principal de plusieurs dizaines de milliampères utilisé par l'amplificateur 17 est ramené à une valeur 20 à 100 fois plus faible pour être utilisé par la partie réception 13' sur la broche Iin. Un pont de résistance R1, R2 permettant la division du signal de tension régulée Vreg pour asservissement d'un amplificateur différentiel 30 à une tension de référence Vref. Cette tension Vreg est utilisée comme tension d'alimentation de l'amplificateur de puissance 17.

D'autres régulateurs connus de l'homme de l'art peuvent être utilisés et simplement adaptés.

## Revendications

1. Dispositif d'émission-réception RF comprenant

- une antenne (11),
- une partie émission (12), qui comprend un régulateur d'alimentation (16) relié à un amplificateur de puissance (17) qui délivre un signal RF de puissance modulé à l'antenne (11),
- une partie réception (13'), qui comprend un bloc de gain-filtrage basse fréquence (27),
- un bloc de traitement et d'interfaçage numérique (14),

caractérisé en ce que le signal d'entrée du bloc gain-filtrage basse fréquence (27) de la partie réception (13') est fourni par le régulateur d'alimentation (16), qui génère un courant image (Im) du courant (Ireg) tiré par l'amplificateur de puissance (17) sur le régulateur d'alimentation.

2. Dispositif selon la revendication 1, qui est une station de base de génération d'un champ électromagnétique apte à communiquer avec au moins un module portable (20) entrant dans ce champ.

3. Dispositif selon la revendication 1, dans lequel le régulateur d'alimentation (16) est un régulateur de tension de type LDO, qui comprend :

- un premier transistor de régulation (M1) principal de type PMOS ;
- un second transistor de type PMOS dont la taille (W) est un sous-multiple entier de la taille du premier transistor et dont la longueur (L) est identique à la longueur de celui-ci ;
- un amplificateur différentiel (30), et
- un pont de résistances (R1, R2).

## Claims

1. RF transmission-reception device comprising:

- an antenna (11),
- a transmission part (12) comprising a supply regulator (16) connected to a power amplifier (17) that outputs a RF signal with modulated power to the antenna (11),
- a reception part (13') comprising a RF gain-filter module (27),
- a digital processing and interface module (14),

characterized in that the input signal of the RF gain-filter module (27) of the reception part (13') is supplied by supply regulator (16) which generates an image current (Im) of the current (Ireg) taken by power amplifier (17) from the supply regulator.

2. Device according to claim 1, that is a base station for the generation of an electromagnetic field to communicate with at least one portable module (20) entering this field.

3. Device according to claim 1, in which the supply regulator (16) is an LDO type voltage regulator, that includes:

> - a first PMOS type main regulation transistor (M1),
> - a second PMOS type transistor, the size (W) of which is an integer sub-multiple of the size of the first transistor and the length (L) of which is identical to the length of the first transistor,
> - a differential amplifier (30), and
> - a resistance bridge (R1, R2).

**Patentansprüche**

1. RF-Sender-Empfänger-Vorrichtung, umfassend:

> - eine Antenne (11),
> - einen Senderteil (12), der einen Versorgungsregler (16) umfasst, verbunden mit einem Leistungsverstärker (17), welcher der Antenne (11) ein moduliertes RF-Signal liefert,
> - einen Empfängerteil (13'), der einen Verstärker-Niederfrequenzfilterblock (27) umfasst,
> - einen Verarbeitungs- und Digitalschnittstellenblock (14),

> **dadurch gekennzeichnet, dass** das Eingangssignal des Verstärker-Niederfrequenzfilterblocks (27) des Empfängerteils (13') durch den Versorgungsregler (16) geliefert wird, der einen Abbildungsstrom bzw. ein Strombild (Im) des Stroms Ireg) erzeugt, den der Versorgungsregler dem Leistungsverstärker (17) liefert.

2. Vorrichtung nach Anspruch 1, die eine Basisstation zur Erzeugung eines elektromagnetischen Feldes ist, fähig mit wenigstens einem in dieses Feld eintretenden bzw. eindringenden tragbaren Modul (20) zu kommunizieren.

3. Vorrichtung nach Anspruch 1, bei der der Versorgungsregler (16) ein Spannungsregler des Typs LDO ist, der umfasst:

> - einen ersten Hauptregelungtransistor (M1) des Typs PMOS;
> - einen zweiten Transistor des Typs PMOS, dessen Größe (W) ein ganzes Untervielfaches der Größe des ersten Transistors ist und dessen Länge (L) genau der Länge von diesem entspricht;
> - einen Differentialverstärker (30), und
> - eine Widerstandsbrücke (R1, R2).

FIG. 1

FIG. 2

FIG. 3

FIG. 4

FIG. 5

**EP 1 471 366 B1**

**Documents brevets cités dans la description**

- FR 2808941
- US 6049292 A
- US 2002008611 A
- EP 0940769 A